# EUROPEAN PATENT APPLICATION

(11) **EP 2 450 591 A2**
(43) Date of publication of application: **09.05.2012**
(21) Application number: 11188520.8
(22) Date of filing: 09.11.2011
(51) Int. Cl.: F16F 9/02, F16F 9/36, F16F 9/43

(54) **Methods and apparatus for sag adjustment**

(30) Priority: 09.11.2010 US 411901 P; 27.12.2010 US 427438 P; 12.09.2011 US 533712 P; 07.02.2011 US 22346
(71) Applicant: Fox Factory, Inc., Watsonville, CA 95076 (US)
(72) Inventor: Galasso, Mario, CA 95076 (US); Anderson, Bryan Wesley, CA 95076 (US); Wootten, Dennis K., CA 95066 (US)
(74) Representative: Casbon, Paul Richard

(57) **Abstract**

A method and apparatus for adjusting the sag setting of a vehicle suspension are disclosed. An integrated damper/gas spring shock absorber includes a bleed port located at a position on a gas spring cylinder corresponding to a desired sag setting. The gas spring may be over pressurized to a pressure above the expected operating pressure of the gas spring. The vehicle may then be loaded with the normal operating load, partially compressing the shock absorber. Opening the bleed port allows gas to vent from the gas spring, further compressing the shock absorber until a piston in the gas spring closes the bleed port from the inner surface of the gas spring cylinder. A sleeve may be inserted over the gas spring cylinder, the sleeve including one or more sealing elements that seal the bleed port from the outer surface of the gas spring cylinder during normal operation.

## Description

### CROSS-REFERENCE TO RELATED APPLICATIONS

This application claims benefit of United States Provisional Patent Application Serial Number 61/411,901, filed November 9, 2010, United States Provisional Patent Application Serial Number 61/427,438, filed December 27, 2010, and United States Provisional Patent Application Serial Number 61/533,712, filed September 12, 2011, and is a Continuation-In-Part of United States Patent Application Serial Number 13/022,346, filed February 7, 2011, which claims benefit of United States Provisional Patent Application Serial Number 61/302,070, filed February 5, 2010, and is a Continuation-In-Part of United States Patent Application Serial Number 12/773,671, filed May 4, 2010, which claims the benefit of United States Provisional Application Serial Number 61/175,422, filed May 4, 2009, and is also a Continuation-In-Part of United States Patent Application Serial Number 12/727,915, filed March 19, 2010, which claims benefit of United States Provisional Patent Application Serial Number 61/161,552, filed March 19, 2009, and United States Provisional Patent Application Serial Number 61/161,620, filed March 19, 2009, each of the aforementioned related patent applications is herein incorporated by reference in its entirety.

### BACKGROUND OF THE INVENTION

### Field of the Invention

The invention relates generally to vehicle suspensions and, more specifically, to methods and apparatus for sag adjustment.

### Description of the Related Art

Vehicle suspension systems typically include some form of a shock absorber. Many integrated damper/spring shock absorbers include a damper body surrounded by a mechanical spring. The damper body often consists of a vented piston and a shaft telescopically mounted in a fluid cylinder. Some shock absorbers utilize gas as a spring medium in place of, or in addition to, a mechanical spring. The spring rate of such shock absorbers may be adjustable such as by adjusting the preload of a mechanical spring or adjusting the pressure of the gas in the shock absorber. In that way the shock absorber can be adjusted to accommodate heavier or lighter carried weight, or greater or lesser anticipated impact loads. In some instances the spring (gas or mechanical) may comprise different stages having varying spring rates thereby giving the overall shock absorber a compound spring rate depending variably throughout the stroke length. In vehicle applications, including motorcycles, bicycles, and, particularly, off-road applications, shock absorbers are pre-adjusted to account for varying terrain and anticipated speeds and jumps. Shocks are also adjusted according to certain rider preferences (e.g. soft - firm).

One disadvantage with conventional shock absorbers is that adjusting the spring mechanism to the correct preset may be difficult. The vehicle must be properly loaded for the expected riding conditions such as by sitting on the vehicle while the spring mechanism is adjusted to create a proper amount of preload. Due to the setup of conventional systems, many times such adjustment requires both a rider sitting on the vehicle and a separate mechanic performing the proper adjustment at the location of the shock absorber. A further disadvantage is that many current systems rely on imprecise tools to set the initial amount of preload. For example, a mechanic may measure the compression of the shock with a ruler while simultaneously pressurizing the gas spring mechanism. Such techniques are imprecise and complicated to properly perform.

As the foregoing illustrates, what is needed in the art are improved techniques for easily adjusting the amount of preload applied to a spring in a shock absorber.

### SUMMARY OF THE INVENTION

One embodiment of the present disclosure sets forth a shock absorber that includes a gas spring cylinder containing a piston. The piston is moveable between an extended position and a compressed position within the gas spring cylinder. A fill port is fluidly coupled to a gas of the cylinder and configured to enable gas to be added to the cylinder, and, in addition, a bleed port fluidly coupled to the cylinder at a first position corresponding to a first sag setting of the shock absorber. Another embodiment of the present disclosure sets forth a vehicle suspension system that includes the shock absorber discussed above. The vehicle suspension system may also include a front fork incorporating the described elements of the shock absorber.

Yet another embodiment of the present disclosure sets forth a method for adjusting a vehicle suspension. The method includes the steps of pressurizing a gas spring cylinder of a shock absorber, loading the vehicle suspension with an expected operating load, bleeding air from the cylinder through a bleed port/valve until a sealing element attached to a piston automatically closes the bleed valve, and closing the bleed valve to prevent further air from bleeding from the cylinder during normal operation.

One advantage of some disclosed embodiments is that a rider may easily and automatically adjust the preload of a shock absorber without assistance from another individual. The rider simply opens the bleed port/valve until gas no longer bleeds from the air spring.

According to one aspect of the invention there is provided a shock absorber comprising:
a gas spring cylinder containing a piston, the piston being moveable between an extended position and a compressed position within the gas spring cylinder; and
a bleed port fluidly coupled to the cylinder at a first position, wherein the first position corresponds to a first sag setting of the shock absorber.

Preferably, the first position corresponds to a point on the cylinder, measured from the extended position of the piston, substantially equal to 25 percent of the distance between the extended position of the piston and the compressed position of the piston.

Advantageously, the first position corresponds to a point on the cylinder, measured from the extended position of the piston, within the range of the extended position of the piston and approximately 50 percent of the distance between the extended position of the piston and the compressed position of the piston.

Preferably, the shock absorber further comprises a sleeve inserted over the cylinder and substantially coaxial therewith, the sleeve configured to close the bleed port in a first position and open the bleed port in a second position.

Advantageously, the sleeve is coupled to the cylinder via a course thread, the sleeve moveable from the first position to the second position by rotating the sleeve on the course thread.

Preferably, the sleeve is retained on the cylinder via a retaining ring and spring biased towards the first position.

Advantageously, the shock absorber further comprises a bleed valve fluidly coupled with the bleed port. In certain embodiments the bleed valve enables the sag setting of the shock absorber to be infinitely adjustable up to the first position.

In one embodiment the bleed valve is a Schrader type pneumatic valve.

Preferably, the shock absorber further comprises a secondary bleed port fluidly coupled to the cylinder at a second position, wherein the second position corresponds to a second sag setting of the shock absorber that is different from the first sag setting.

Advantageously, the shock absorber further comprises a sleeve inserted over the cylinder and substantially coaxial therewith, the sleeve configured to fluidly couple the bleed port to a bleed valve when the sleeve is in a first position and fluidly couple the secondary bleed port to the bleed valve when the sleeve is in a second position.

Preferably, the shock absorber further comprises a bypass channel formed in an inside surface of the cylinder at a second position, wherein the bypass channel is configured to enable the pressure of gas on both sides of the piston to equalize when the piston is located approximately in the second position within the cylinder.

Advantageously, the shock absorber further comprises a damper that includes:
a damping cylinder having first and second ends; and
a movement damping element movably mounted within the damping cylinder,
wherein the second end of the damping cylinder is telescopically housed within the cylinder and is coupled to the piston.

According to another aspect of the invention there is provided a vehicle suspension system comprising a shock absorber that includes:
a gas spring cylinder containing a piston, the piston being moveable between an extended position and a compressed position within the gas spring cylinder; and
a bleed port fluidly coupled to the cylinder at a first position, wherein the first position corresponds to a first sag setting of the shock absorber.

Preferably, the vehicle suspension system further comprises a front fork having a first telescopic tube and a second telescopic tube, the first telescopic tube including a second gas spring cylinder, and a second bleed port, and the second telescopic tube including a damper.

Advantageously, a first end of the shock absorber is coupled to a main frame of the vehicle and a second end of the shock absorber is coupled to a rear swingarm of the vehicle that is moveable relative to the main frame.

Preferably, the shock absorber further comprises a sleeve inserted over the cylinder and substantially coaxial therewith, the sleeve configured to close the bleed port in a first position and open the bleed port in a second position, wherein the sleeve is coupled to the cylinder via a course thread and moveable from the first position to the second position by rotating the sleeve on the course thread.

Advantageously, the shock absorber further comprising a bleed valve fluidly coupled with the bleed port.

In one embodiment the bleed valve is a Schrader type pneumatic valve.

Preferably, the shock absorber further comprises a secondary bleed port fluidly coupled to the cylinder at a second position, wherein the second position corresponds to a second sag setting of the shock absorber that is different from the first sag setting.

Advantageously, the shock absorber further comprises a sleeve inserted over the cylinder and substantially coaxial therewith, the sleeve configured to fluidly couple the bleed port to a bleed valve when the sleeve is in a first position and fluidly couple the secondary bleed port to the bleed valve when the sleeve is in a second position.

Preferably, the shock absorber further comprising a bypass channel formed in an inside surface of the gas spring cylinder at a second position, wherein the bypass channel is configured to enable the pressure of gas on both sides of the piston to equalize when the piston is located approximately in the second position within the cylinder.

Advantageously, the shock absorber further comprising a damper that includes:
a damping cylinder having first and second ends; and
a movement damping element movably mounted within the damping cylinder,
wherein the second end of the damping cylinder is telescopically housed within the cylinder and is coupled to the piston.

According to another aspect of the invention there is provided a vehicle suspension system comprising a shock absorber as aforesaid.

According to yet another aspect of the invention there is provided a vehicle comprising a vehicle suspension system as aforesaid.

According to yet another aspect of the present invention there is provided a method for adjusting a vehicle suspension, the method comprising:
pressurizing a gas spring cylinder of a shock absorber to a first pressure, wherein the first pressure is greater than an expected operating pressure of the shock absorber;
loading the vehicle suspension to partially compress the shock absorber;
bleeding gas from the cylinder through a bleed port fluidly coupled to the cylinder at a first position that corresponds to a first sag setting of the shock absorber; and
automatically closing the bleed port with a sealing element within the cylinder when the shock absorber compresses to a position corresponding with the first position.

Preferably, the cylinder is pressurized by pumping gas into the cylinder through a fill port fluidly coupled to the cylinder through a first end of the cylinder.

Advantageously, loading the vehicle suspension comprises a rider sitting on the vehicle.

Preferably, bleeding gas from the cylinder comprises rotating a sleeve on an external surface of the cylinder, thereby causing the sleeve to move from a first sleeve position to a second sleeve position, wherein the sleeve closes the bleed port in the first sleeve position and opens the bleed port in the second sleeve position.

Advantageously, bleeding gas from the cylinder comprises retracting a sleeve from a first sleeve position to a second sleeve position, the sleeve being biased by a spring to rest at the first sleeve position, wherein the sleeve closes the bleed port in the first sleeve position and opens the bleed port in the second sleeve position.

Preferably, bleeding gas from the cylinder comprises:
rotating a sleeve on an external surface of the cylinder, thereby causing the sleeve move to either a first sleeve position or a second sleeve position, wherein the sleeve fluidly couples a bleed valve with the bleed port in the first sleeve position or a second bleed port in the second sleeve position; and
actuating the bleed valve to allow gas to bleed from the cylinder.

Advantageously, bleeding gas from the cylinder comprises rotating a sleeve around the cylinder from a first sleeve position to a second sleeve position, the sleeve being restrained to not move in the axial direction relative to the cylinder, wherein the sleeve closes the bleed port in the first sleeve position and opens the bleed port in the second sleeve position.

Preferably, automatically closing the bleed port comprises moving a piston within the cylinder to a location proximate to the bleed port such that the sealing element abuts the inner surface of the bleed port.

Advantageously, the method further comprises bleeding gas from the cylinder through a second bleed port fluidly coupled to the cylinder at a second position, the pressure in the cylinder decreasing from the second pressure to a third pressure, wherein the second position corresponds to a second sag setting of the shock absorber.

Preferably, the method further comprises closing the bleed port with a second sealing element located externally to the cylinder after the sealing element automatically closes the bleed port.

According to another aspect of the present invention there is provided a kit comprising a shock absorber as aforesaid and a set of instructions for performing the method as aforesaid.

According to another aspect of the present invention there is provided a vehicle suspension comprising:
an air spring having a first position at a first load and a second position at a second load;
a position valve corresponding to a second position the position valve having an automatic shutoff.

According to another aspect of the present invention there is provided a method for adjusting a vehicle suspension comprising:
opening a sag setting valve first valve member;
flowing a gas through the sag setting valve; and
automatically closing the sag setting valve with a second valve member.

### BRIEF DESCRIPTION OF THE DRAWINGS

Figure 1 is a schematic illustration of a gas spring shock absorber, according to one example embodiment;

Figure 2 is a sectional side elevation view of a gas spring shock absorber, according to one example embodiment;

Figure 3 is a sectional side elevation view of a gas spring shock absorber, according to another example embodiment;

Figure 4 is a sectional side elevation view of a gas spring shock absorber, according to yet another example embodiment;

Figure 5 is a sectional side elevation view of a gas spring shock absorber, according to still other example embodiments;

Figures 6 and 7 illustrate sectional plan views of various embodiments of the rotary sleeve of Figure 5; and

Figure 8 sets forth a flowchart of a method for adjusting a vehicle suspension that includes a gas spring shock absorber, according to one example embodiment.

### DETAILED DESCRIPTION

Integrated damper I spring vehicle shock absorbers often include a damper body surrounded by a mechanical spring or constructed in conjunction with an air spring. The damper often consists of a piston and shaft telescopically mounted in a fluid filled cylinder. A mechanical spring may be a helically wound spring that surrounds the damper body. Various integrated shock absorber configurations are described in U.S. Patent Numbers 5,044,614; 5,803,443; 5,553,836; and 7,293,764; each of which is herein incorporated, in its entirety, by reference.

When adjusting the suspension of a vehicle, an important initial setting to get correct is suspension "sag." The amount of sag is the measured distance a shock absorber compresses while the rider, wearing intended riding gear, is seated on (for example) a bicycle or motorcycle in a riding position, relative to the shock absorber's fully extended position (sag also applies to ATVs, trucks and other suspension equipped vehicles). Getting the sag correct sets the front end steering/handling geometry, puts the rear suspension at its intended linkage articulation for pedaling efficiency (if applicable) and bump absorption and provides some initial suspension compression to allow the wheels/suspension to react to negative terrain features (e.g. dips requiring suspension extension) without having the entire vehicle "fall" into those features. Often any attention that is paid to this initial sag setting is focused on the rear suspension, especially in motorcycle applications, but making sure that both the front and rear sag settings are correct are equally important. In one embodiment, each suspension component is equipped with a position sensor (e.g. electronic or mechanical) for indicating the magnitude (or state) of extension or compression existing in the suspension.

It is noted that embodiments herein of shock absorbers and related systems are equally applicable to the front forks of various vehicles, such as bicycles. In such front forks, components related to the gas spring may be included in a first telescopic tube of the front fork and components related to the damper may be included in a second telescopic tube of the front fork. The first and second telescopic tubes may be coupled via a yoke attached to the steering mechanism. Further, it is contemplated that a vehicle may include both a shock absorber and a front fork, both of which have some or all of the features disclosed herein. For example, a motorcycle may include a front fork coupled to the handlebars of the motorcycle at an upper end of the front fork and coupled to the front axle at the lower end of the front fork. Similarly, that same motorcycle may also include a shock absorber coupled to the main frame of the motorcycle at a first end of the shock absorber and coupled to the rear swingarm at the second end of the shock absorber.

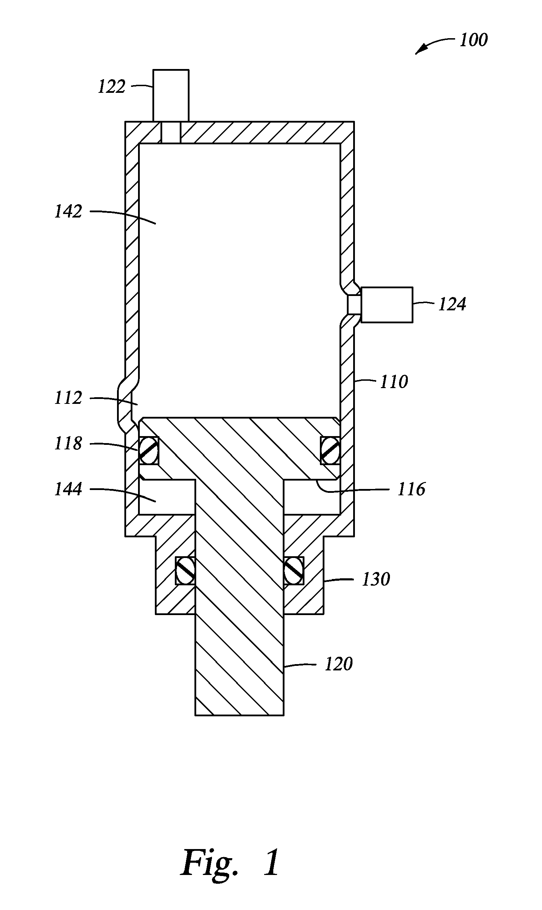

Figure 1 is a schematic illustration of a gas spring shock absorber 100, according to one example embodiment. As shown in Figure 1, the gas spring shock absorber 100 includes a gas cylinder 110 and a piston rod 120 connected to a piston 116 that is telescopically housed within the gas cylinder 110. The piston rod 120 passes through a sealed head 130 of the shock absorber 100. The piston 116 reciprocates in the cylinder body and is sealed against an inner surface of the cylinder body via a sealing element 118 (e.g., an o-ring) preventing gas from a positive air spring 142 from flowing into a negative air spring 144. As the piston rod 120 is forced into the gas spring shock absorber 100, the piston 116 moves into the gas cylinder 110 and compresses the gas in the positive air spring 142 thereby resisting the motion of the piston rod 120 as the volume of the positive air spring 142 decreases. Similarly, as the piston rod 120 is extracted from the gas cylinder 110, the piston 116 moves towards the sealed head 130 of the gas cylinder 110 and compresses the negative air spring 144 resisting motion of the piston rod 120 as the shock absorber 100 approaches the fully extended position.

In one embodiment, the shock absorber 100 is connected to a rear linkage of a bicycle. In order to charge the positive air spring 142, gas is pumped into the gas cylinder 110 via a fill valve 122. Fill valve 122 comprises a Schrader type valve such as commonly used with bicycle tubes. In alternative embodiments, fill valve 122 may be some other pneumatic type valve well-known to those of skill in the art. Gas is continually added (e.g., by means of a pump or air compressor) to the gas cylinder 110 via fill valve 122 such that the pressure within the positive air spring 142 increases and forces the piston 116 towards the sealed head 130 of the shock absorber 100. Gas is added until the pressure in the positive air spring 142 reaches a max pressure P₁ (e.g., 300 psi) that is beyond a reasonably anticipated operating pressure but still below any structural pressure limitations of the gas cylinder 110. Fill valve 122 may then be closed, sealing the gas inside the gas cylinder 110. Gas cylinder 110 also includes a bypass channel 112 located a fixed distance D_{B} from the sealed head 130 of the shock absorber 100. Bypass channel may be a dimple in the side of gas cylinder 110 configured such that when piston 116 is located at the distance D_{B} within the stroke, gas from the positive air spring 142 may flow freely to the negative air spring 144, thereby equalizing the pressure on both sides of piston 116. As piston 116 moves below the bypass channel 112, the pressure in the negative air spring 144 will be greater than the pressure in the positive air spring 142, applying a force on the piston 116 away from the sealed head 130 of the shock absorber 100. Conversely, as piston 116 moves above the bypass channel 112, the pressure in the negative air spring 144 will be less than the pressure in the positive air spring 142, applying a force on the piston 116 toward the sealed head 130 of the shock absorber 100.

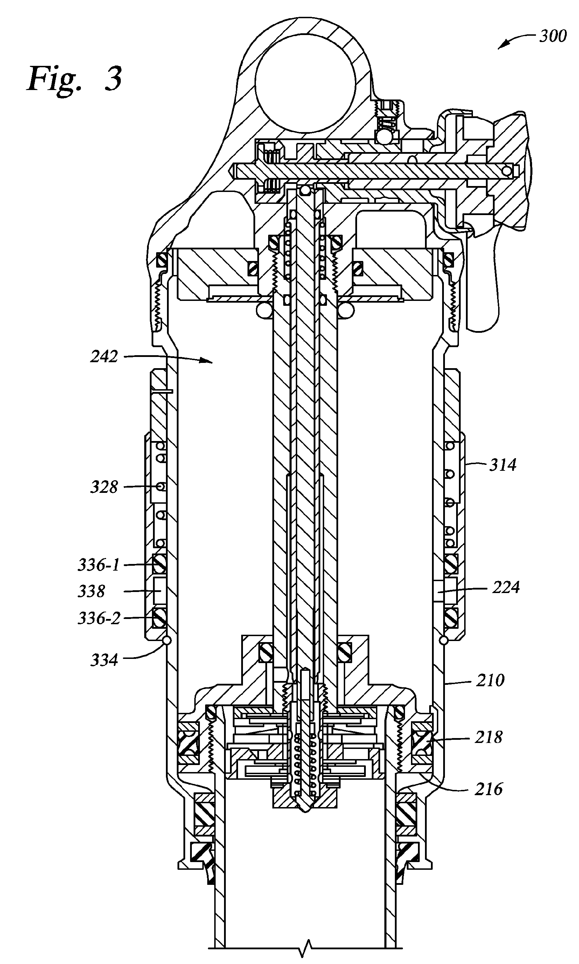

United States patent number 6,135,434 ("'434 Patent") which is entirely incorporated herein by reference discloses (see Figures 3, 4 and 5 and descriptions thereof) an integral air spring and damper type shock absorber including a negative gas spring and a bypass port or channel. As described in the '434 Patent, the axial location of the bypass channel is important in properly setting the negative air spring 144 pressure versus the positive air spring 142 pressure throughout the shock stroke.

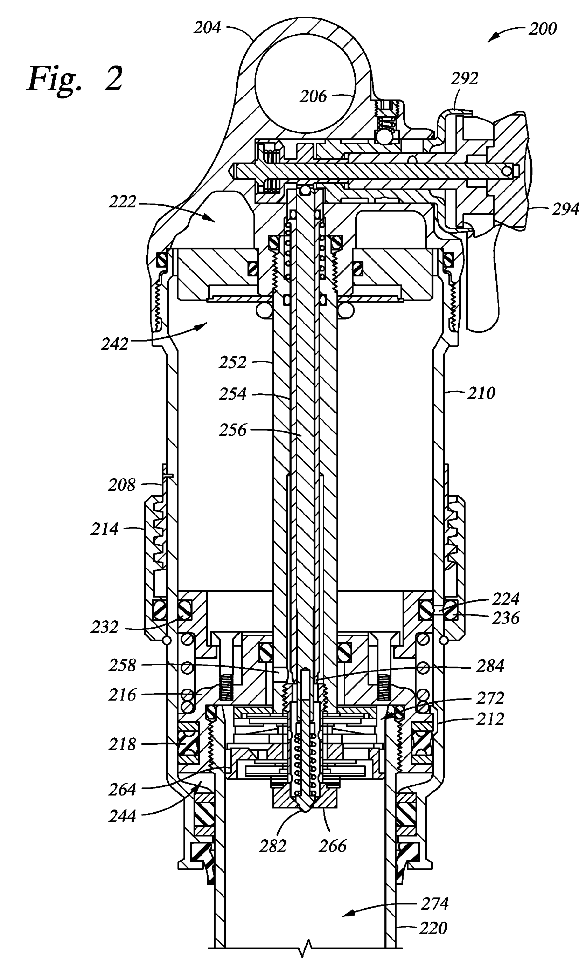

In one embodiment, the initial suspension "sag" setting can be automatically set and facilitated by integrating a sag setting bleed valve 124 at a particular location in the gas cylinder 110 that is configured to allow a rider to bleed off air pressure within the positive air spring 142 until a specific sag level is achieved (based on the initial load placed on the shock absorber 100). Each shock absorber would be configured with a specific, fixed sag position corresponding to the location of the sag setting bleed valve. In order to adjust the preload of the gas spring to a correct sag position, a load L₁, corresponding to at least a portion of the weight of a rider, is applied to the shock absorber 100 such that piston 116 is moved to a distance D₁ from the sealed head 130 of the shock absorber 100. Distance D₁ corresponds to a point where the force on piston 116 based on the differential pressure between the positive air spring 142 and the negative air spring 144 is equal to the load L₁. At a position D₁ and pressure P₁, the shock absorber 100 is "stiff" and the setup of the shock absorber 100 may need adjustment to provide a comfortable ride for the vehicle. The sag setting bleed valve 124 may be opened to decrease the pressure in the positive air spring 142. The sag setting bleed valve 124 is located at a distance D₂ (greater than D₁) from the sealed head 130 of the shock absorber 100. As the pressure decreases from the max pressure P₁, the load L₁ forces the piston rod 120 into the gas cylinder 110 until the piston 116 is located at the distance D₂ such that the piston seal 118 blocks the inner surface of the port connected to the sag setting bleed valve 124 preventing any further gas from escaping from the positive air spring 142. In one embodiment, the sag setting bleed valve 124 is of a similar type to fill valve 122 (i.e., a Schrader type pneumatic valve). In other embodiments, sag setting bleed valve 124 may be a port or an aperture that may be closed via the abutment of a seal over the aperture, various examples of which are described below in conjunction with Figures 2-7.

In one embodiment, sag setting bleed valve 124 may be actuated directly by a rider such as by depressing the valve stem inside a Schrader type valve that is threaded into a port drilled through the wall of the gas cylinder 110. In another embodiment, the sag setting bleed valve 124 may be actuated indirectly via a control mechanism remotely located on another part of the vehicle. For example, a button may be located on a handlebar of the vehicle or within the cab of the vehicle that, when pressed, actuates the sag setting bleed valve 124. The control mechanism may actuate the sag setting bleed valve 124 via a cable based actuator (similar to common clutch or brake linkages on conventional motorcycles or bicycles), an electric actuator, or a pneumatic actuator. In yet another embodiment, the sag setting bleed valve may be pneumatically coupled to the port in the gas cylinder 110 via a hose and located remotely from the shock absorber 100.

Using the sag setting bleed valve 124 to setup the vehicle suspension provides a single sag setting based on the location of the sag setting bleed valve 124 within the shock stroke. Alternatively, the fill valve 122 may be used to set an "infinite" number of sag positions by filling or bleeding gas into or out of the positive air spring 142 such that the steady state position of piston 116 is located at a distance D_{S} from the sealed head 130 of the shock absorber. However, when using the fill valve 122 to adjust the sag setting, the user must monitor the pressure of positive air spring 142 or the amount of compression of shock absorber 100, such as with a pressure sensor or with a scale or ruler etched into the side of the piston rod 120, in order to properly gauge the correct amount of sag for a given load.

Figure 2 is a sectional side elevation view of a gas spring shock absorber 200, according to one example embodiment. The shock absorber 200 in Figure 2 is shown in an extended position and may be mounted to the rear linkage of a vehicle via eyelet 206, which may include a bearing (not shown). Shock absorber 200 is an integrated damper/gas spring type shock absorber that includes a damping fluid cylinder 220 telescopically housed within a gas cylinder 210. A shaft 252 connects a sealed, upper end of the gas cylinder 210 with a vented damping piston 264 movably mounted within the damping fluid cylinder 220. The upper end of the gas cylinder 210 is sealed via an upper mounting element 204 that is threaded onto the outside of the gas cylinder 210. Similar to shock absorber 100, shock absorber 200 includes a positive air spring 242, a negative air spring 244, a piston 216, and a fill port 222. Damping fluid cylinder 220 is coupled to piston 216 on a sealed, upper end of the damping fluid cylinder 220 and movably mounted within the gas cylinder 210. Piston 216 includes a sealing element 218 such as an o-ring that seals the outer edge of the piston against the inner surface of the gas cylinder 210, thereby isolating gas in the positive air spring 242 from gas in the negative air spring 244. Gas cylinder 210 also includes a bypass port 212 (or channel) that enables the pressure in positive air spring 242 to equalize with the pressure in negative air spring 244 when piston 216 is located proximate to the fully extended position.

The vented damping piston 264 is secured to one end of shaft 252 via a hallow bolt 266. Vented damping piston 264 includes shim stacks that cover fluid paths through the vented damping piston 264. As shock absorber 200 compresses or expands, vented damping piston 264 is forced to move relative to the damping fluid cylinder 220. As the damping fluid cylinder 220 is forced up into the gas cylinder 210, a differential pressure between the fluid (or gas) in fluid volume 272 (i.e., the volume of fluid between the vented damping piston 264 and the piston 216 within the damping fluid cylinder 220) and the fluid in fluid volume 274 (i.e., the volume of fluid below the vented damping piston 264 within the damping fluid cylinder 220) increases. As the differential pressure passes a first threshold value, a compression shim stack bends allowing fluid to flow from fluid volume 272 on one side of the vented damping piston 264 to fluid volume 274 on the other side of the vented damping piston. The size and configuration (i.e., the amount of preload) of the compression shim stack determines the first threshold value required to allow fluid to flow from fluid volume 272 to fluid volume 274. Similarly, vented damping piston 264 also includes a rebound shim stack, which, during rebound (i.e., as damping fluid cylinder 220 is extracted from gas cylinder 210) of the shock absorber 200, allows fluid to flow from fluid volume 274 back into fluid volume 272 once the differential pressure reaches a second threshold value that is opposite in direction from the first threshold value (i.e., the pressure in fluid volume 274 exceeds the pressure in fluid volume 272). The size and configuration of the rebound shim stack determines the second threshold value required to allow fluid to flow from fluid volume 274 to fluid volume 272.

Shock absorber 200 also includes a blowoff valve 282 and a slow rebound valve 284. Blowoff valve 282 is mounted inside hollow bolt 266. An outer control arm 254 is telescopically mounted inside shaft 252 and controls the amount of fluid that flows through the slow rebound valve 284, which may be adjusted by turning a first control knob 292 mounted externally to the upper mounting element 204. Fluid may flow from fluid volume 274 through a bypass port 258 and through the slow rebound valve 284 to return to fluid volume 272. This rebound fluid path allows a small amount of fluid to bypass the rebound shim stacks in vented damping piston 264 and return to fluid volume 272 as shock absorber 200 returns to an extended position. Similarly, an inner control arm 256 is telescopically mounted inside outer control arm 254 and controls the amount of preload applied to blowoff valve 282, which may be adjusted by turning a second control knob 294 mounted externally to the upper mounting element 204. The blowoff valve 282 and the slow rebound valve 284 are adjusted via a cam mechanism that rides against the upper surface of inner control arm 256 and outer control arm 254, respectively. The cam mechanisms are located proximate to the upper end of shaft 252. In alternative embodiments, vented damping piston 264 may be replaced by other technically feasible motion damping elements well-known to those of skill in the art.

Shock absorber 200 also includes a topout shutoff seal 232 that, when piston 216 is in the fully extended position, prevents gas in the positive air spring 242 from leaking out of the sag setting bleed port 224. As shown in Figure 2, an O-ring or other type of seal is positioned such that, in the fully extended position, the O-ring abuts the sag setting bleed port 224, sealing the inner surface of the sag setting bleed port 224 from the inside of the gas cylinder 210. Although not explicitly shown, gas may be pumped into the fill port 222 via a Schrader type valve or other pneumatic valve that is fluidly coupled to fill port 222 through an external surface of the upper mounting element 204.

The gas spring shock absorber 200 of Figure 2 is configured to enable automatic sag adjustment by a rider using the rotary sleeve 214 threaded onto course threads 208 located on the external surface of gas cylinder 210. The rotary sleeve 214 includes a sealing element 236, such as an o-ring, that abuts sag setting bleed port 224, sealing the outer surface of sag setting bleed port 224, when the rotary sleeve 214 is located in a first position. In order to automatically adjust the amount of sag of a vehicle suspension, the positive air spring 242 of shock absorber 200 is over pressurized to a pressure below the maximum structural pressure limit of shock absorber 200 but above the expected operating pressure of shock absorber 200. Then, the rider loads the vehicle suspension with the normal operating load (e.g., by sitting on the vehicle), which partially compresses shock absorber 200 and moves topout shutoff seal 232 away from the inner surface of the sag setting bleed port 224. At this point, the rider may rotate the rotary sleeve such that the course thread 208 forces the sealing member 236 to move away from the outer surface of the sag setting bleed port 224. Air will bleed from the positive air spring 242 via the sag setting bleed port 224 until the load on shock absorber 200 from the weight of the rider forces piston 216 to move to a position where sealing element 218 abuts the inner surface of the sag setting bleed port 224. Typical sag settings may correspond to shock absorber compression of 25% (i.e., distance D₂ is equal to ¼ of the stroke length where D is equal to 0 when shock absorber 200 is in the fully extended position). Because the sag setting bleed port 224 and the bypass port 212 perform different functions it may be useful in some embodiments to ensure that their functional (i.e. position in the shock stroke) locations are separate and distinct (i.e., D_{B} # D₂). In one embodiment, sag setting bleed port 224 is located at a position (D₂) on gas spring cylinder 210 that is equal to approximately 25% of the stroke length of shock absorber 200. In other embodiments, sag setting bleed port 224 is located at a position (D₂) on gas spring cylinder 210 that is within a range between 0% and 50% of the stroke length. It will be appreciated that the position of the sag setting bleed port 224 determines the amount of sag for the shock absorber 200 and that changing the position of the sag setting bleed port 224 relative to the position of the piston 216 at different points in the stroke length will result in different amounts of sag and a different feel for the rider (e.g., a stiff ride or a soft ride).

Figure 3 is a sectional side elevation view of a gas spring shock absorber 300, according to another example embodiment. Gas spring shock absorber 300 is similar to gas spring shock absorber 200 of Figure 2. The topout shutoff seal 232 is not shown in Figure 3 and may be omitted in some embodiments. If topout shutoff seal 232 is not included within the shock absorber, then gas will bleed from positive air spring 242 whenever the sag setting bleed port 224 is opened. As shown in Figure 3, the rotary sleeve 214 of shock absorber 200 is replaced with a spring loaded sleeve 314.

Spring loaded sleeve 314 is telescopically mounted around gas cylinder 210. Spring loaded sleeve 314 is biased to close over the sag setting bleed port 224 in a first position via spring 328, and is retained on the gas cylinder 210 via a retaining ring 334. The spring loaded sleeve 314, when abutting the retaining ring 334, seals the sag setting bleed port 224 via a first sealing element 336-1 and a second sealing element 336-2 that form a sealed cavity 338 between the inner surface of the spring loaded sleeve 314 and the gas cylinder 210.

In shock absorber 200 of Figure 2, the rotary sleeve 214 seals the sag setting bleed port 224 by positioning a sealing element 236 directly over an outer surface of the sag setting bleed port 224. In contrast, the spring loaded sleeve 314 of Figure 3 seals the sag setting bleed port 224 via two distinct sealing elements, a first sealing element 336-1 located above the sag setting bleed port 224 and a second sealing element 336-2 located below the sag setting bleed port 224. Although, a sealing element does not directly close the outer surface of the sag setting bleed port 224, the structure of the spring loaded sleeve 314 creates a sealed cavity 338 between the first sealing element and second sealing elements that performs the same function. It will be appreciated that, in various embodiments, the sealing implementation of the rotary sleeve 214 of Figure 2 (i.e., a single sealing element that directly abuts the outer surface of the sag setting bleed port 224) may be implemented within the spring loaded sleeve 314 of Figure 3 in lieu of the two sealing element implementation shown in Figure 3, and, similarly, the two sealing element implementation may be implemented within the rotary sleeve 214 of Figure 2.

In order to automatically adjust the sag position using the spring loaded sleeve 314, the positive air spring 242 is over pressurized to a point above the expected operating pressure of shock absorber 300 but below the maximum structural pressure limit of shock absorber 300. Then, the rider will sit on the vehicle or otherwise load the vehicle with the normal operating load, which partially compresses shock absorber 300. At this point, the rider may retract the spring loaded sleeve 314 such that the sag setting bleed port 224 is allowed to bleed gas from the positive air spring 242 further compressing shock absorber 300. Air will bleed from the positive air spring 242 via the sag setting bleed port 224 until the load on shock absorber 300 from the weight of the rider forces piston 216 to move to a position where sealing element 218 abuts the sag setting bleed port 224. The rider may then release the spring loaded sleeve 314 to seal the sag setting bleed port 224.

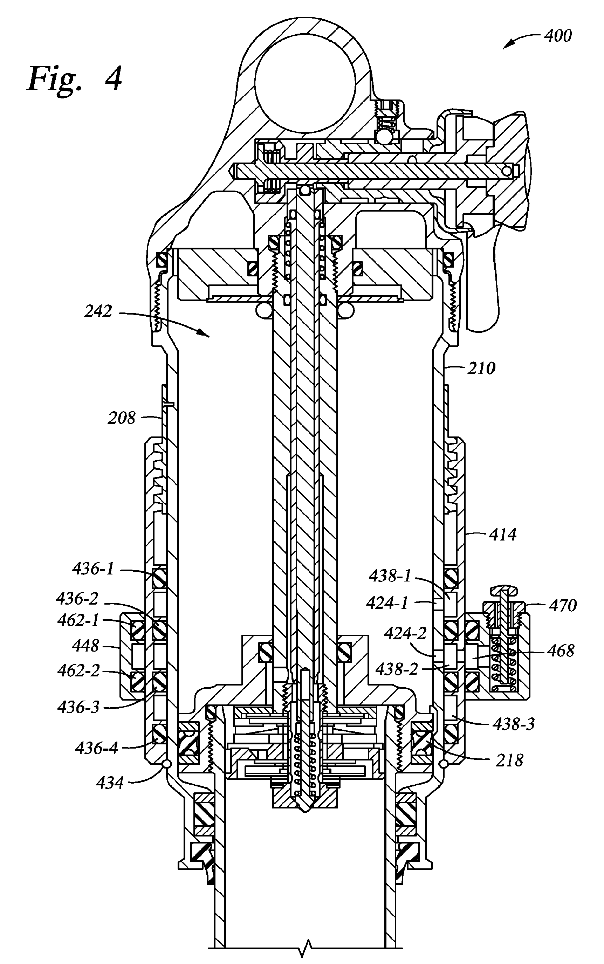

Figure 4 is a sectional side elevation view of a gas spring shock absorber 400, according to yet another example embodiment. Gas spring shock absorber 400 is similar to gas spring shock absorbers 200 and 300 of Figures 2 and 3, respectively. As shown in Figure 4, the rotary sleeve 214 of shock absorber 200 is replaced with a rotary sleeve 414 that is threaded onto course threads 208 on the external surface of gas cylinder 210. Unlike rotary sleeve 214, rotary sleeve 414 includes four distinct sealing members 436-1, 436-2, 436-3, and 436-4 (e.g., o-rings) that form three distinct, sealed cavities (438-1, 438-2, and 438-3) between the inner surface of the rotary sleeve 414 and the outer surface of gas cylinder 210. Unlike shock absorber 200 and shock absorber 300, shock absorber 400 includes both a first sag setting bleed port 424-1 and a second sag setting bleed port 424-2 that allow a user to select between two different amounts of sag in the suspension. The first sag setting bleed port 424-1 corresponds to a "softer" ride and results in a lower relative operating pressure within positive air spring 242 when compared to the operating pressure in positive air spring 242 using the second sag setting bleed port 424-2. The second sag setting bleed port 424-2 corresponds to a "stiffer" ride and results in a higher relative operating pressure within positive air spring 242 when compared to the operating pressure in positive air spring 242 using the first sag setting bleed port 424-1.

As shown in Figure 4, the rotary sleeve 414 is restrained in a first position by a retaining ring 434. In the first position, the first cavity 438-1 is aligned with the first sag setting bleed port 424-1, the second cavity 438-2 is aligned with the second sag setting bleed port 424-2, and the third cavity 438-3 is not aligned with either the first sag setting bleed port 424-1 or the second sag setting bleed port 424-2. A secondary rotary sleeve 448 is aligned coaxially over the rotary sleeve 414 and includes two sealing elements 462-1 and 462-2 that form a sealed cavity 468 that fluidly couples the second cavity 438-2 with a bleed valve 470 via one or more ports in rotary sleeve 414. The bleed valve 470 (e.g., a Schrader type pneumatic valve) allows pressure in the positive air spring 242 to be bled from the shock absorber 400.

In order to properly adjust the sag position for a "stiff" ride, a rider moves the rotary sleeve 414 to the first position such that the bleed valve is fluidly coupled to the second sag setting bleed port 424-2. The shock absorber 400 is over pressurized and loaded with the normal operating load, which partially compresses shock absorber 400. Then a user actuates the bleed valve 470 such that gas bleeds from the positive air spring 242 until the sealing element 218 abuts the inner surface of the second sag setting bleed port 424-2. The user then closes the bleed valve 470 and the vehicle suspension is properly adjusted for a "stiff" ride.

In some situations, a user may prefer a "soft" ride setup for the vehicle suspension and may opt to use the first sag setting bleed port 424-1 instead of the second sag setting bleed port 424-2. In such situations, the rotary sleeve 414 is moved to a second position (by rotating the rotary sleeve 414 such that the course threads 208 force the rotary sleeve 414 to move up the gas cylinder 210) such that and the first cavity 438-1 is not aligned with either the first sag setting bleed port 424-1or the second sag setting bleed port 424-2, the second cavity 438-2 is aligned with the first sag setting bleed port 424-1, and the third cavity 438-3 is aligned with the second sag setting bleed port 424-2. In this manner, the first sag setting bleed port 424-1 is fluidly coupled with the bleed valve 470 and air may be bled from the positive air spring 242 until sealing element 218 abuts the first sag setting bleed port 424-1. Relative to bleeding air using the second sag setting bleed port 424-2, the spring rate of shock absorber 400 that results from setting the sag of the suspension via the first sag setting bleed port 424-1 will be lower.

The shock absorber 400 shown in Figure 4 gives a rider more control over the feel of the suspension while still maintaining the ease of setup provided by implementing the sag setting bleed port 224 at a discrete location within the gas cylinder 210. In such cases, a rider may easily adjust the vehicle according to the type of terrain the rider expects to encounter.

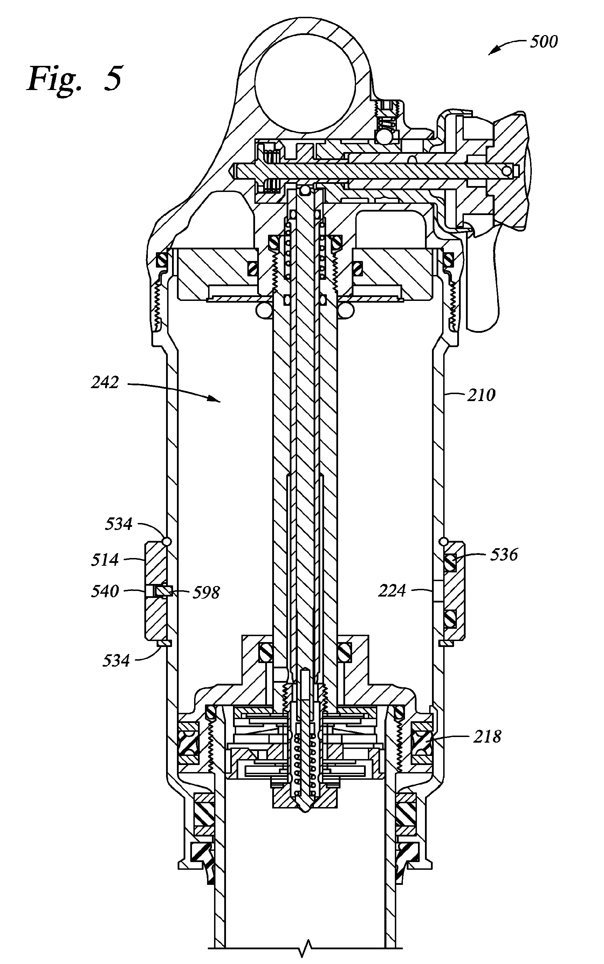

Figure 5 is a sectional side elevation view of a gas spring shock absorber 500, according to still other example embodiments. Again, gas spring shock absorber 500 is similar to gas spring shock absorbers 200, 300, and 400 of Figures 2, 3, and 4, respectively. Shock absorber 500 includes a rotary sleeve 514 that, unlike rotary sleeves 214, 314, and 414, is fixed relative to the stroke axis of shock absorber 500 (i.e., rotary sleeve 514 does not move telescopically with gas cylinder 210). Instead, rotary sleeve 514 merely rotates around gas cylinder 210 such that the sag setting bleed port 224 is sealed or unsealed by sealing element 536. Rotary sleeve 514 is retained on gas cylinder 210 via two retaining rings 534.

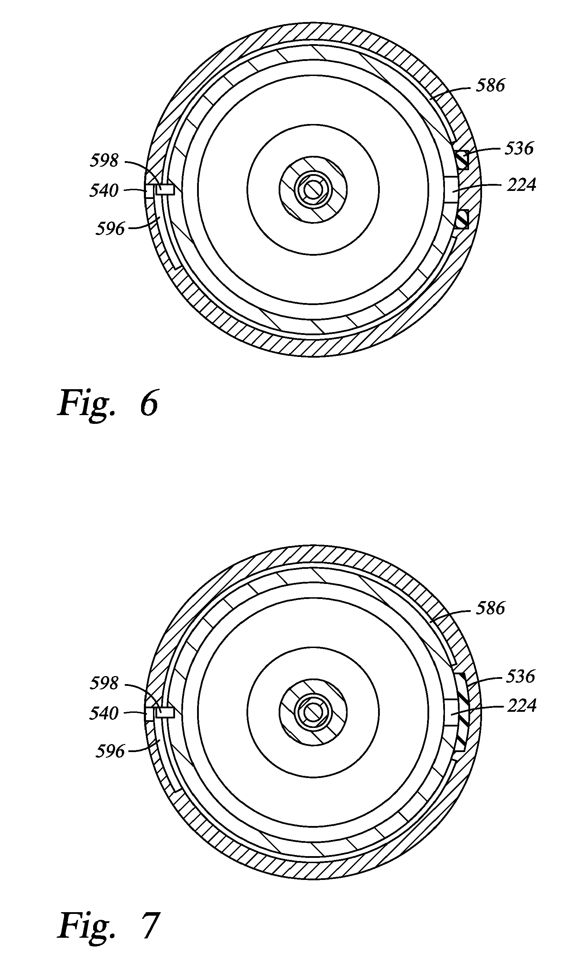

As shown in Figure 5, rotary sleeve 514 includes a sealing element 536 that creates a seal between an inner surface of the rotary sleeve 514 and an outer surface of gas cylinder 210. When rotary sleeve 514 is in a first position, the sealing element 536 seals the sag setting bleed port 224 to prevent air from bleeding from the positive air spring 242. Rotary sleeve 514 also includes a keyway 596 (shown more clearly in Figures 6 and 7) that, in conjunction with a key 598 press fit into gas cylinder 210, prevents the rotary sleeve 514 from rotating more than a certain number of degrees in either direction around the stroke axis. From the first position, the rotary sleeve 514 may be rotated relative to the gas cylinder 210 to a second position such that the sealing element 536 is moved off of the outer surface of the sag setting bleed port 224. In this manner, the sag setting bleed port 224 is fluidly coupled with one or more holes 540 in the rotary sleeve 514 that enable gas to bleed from the positive air spring 242 until sealing member 218 abuts the inner surface of the sag setting bleed port 224.

Figures 6 and 7 illustrate sectional plan views of various embodiments of the rotary sleeve 514 of Figure 5. As shown in Figure 6, sealing element 536 is an o-ring type sealing element that contacts an outer surface of gas cylinder 210, completely surrounding an outer surface of the sag setting bleed port 224, as well as an inner surface of rotary sleeve 514. As shown in Figure 7, sealing element 536 is a disc type sealing element that contacts an outer surface of gas cylinder 210, completely covering the outer surface of the sag setting bleed port 224, as well as an inner surface of rotary sleeve 514.

Both of the embodiments illustrated in Figures 6 and 7 show a keyway 596 in the rotary sleeve 514. The keyway 596 restricts the motion of rotary sleeve 514 such that rotary sleeve 514 may rotate X number of degrees around gas cylinder 210. Hole 540 enables air to bleed from the positive air spring 242 into the environment. In Figures 6 and 7, rotary sleeve 514 is configured in the first position, with the sealing element 536 abutting the outer surface of the sag setting bleed port 224. As a rider rotates rotary sleeve 514 to a second position (where the key 598 is moved to the other end of the keyway 596), the sealing element 536 is moved off of the sag setting bleed port 224 and the positive air spring is fluidly coupled with a channel 586 in the inner surface of the rotary sleeve 514 that provides a fluid path between the sag setting bleed port and the hole 540 in the rotary sleeve 514. As shown, the hole 540 is located proximate to the keyway 596 allowing the key to be pressfit into gas cylinder 210 with the rotary sleeve 514 in place. In alternative embodiments, two or more holes 540 may be spaced circumferentially around rotary sleeve 514 thereby coupling channel 586 to the atmosphere.

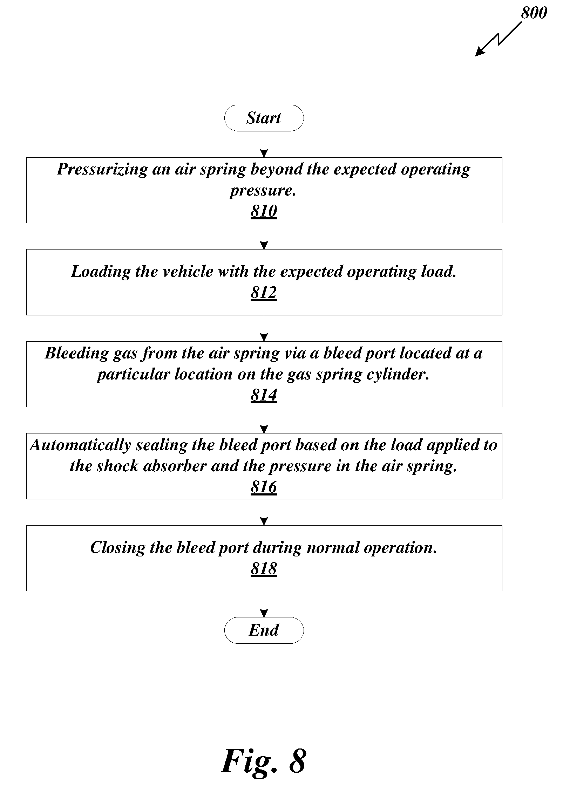

Figure 8 sets forth a flowchart of a method 800 for adjusting a vehicle suspension that includes a gas spring shock absorber 100, according to one example embodiment. Although the method steps are described in conjunction with the apparatus of Figures 1-7, persons skilled in the art will understand that any apparatus configured to perform the method steps, in any order, is within the scope of the disclosure.

The method 800 begins at step 810, where gas is added to the gas spring shock absorber 100 via fill valve 122, forcing piston 116 and piston rod 120 to move toward the fully extended position of the shock absorber 100. For example, positive air spring 142 may be pressurized to 300 psi, a pressure beyond the expected operating range of shock absorber 100. At step 812, the vehicle is loaded with the expected operating load. In one embodiment, a rider sits on the vehicle, which may be a bicycle or motorcycle. The weight of the rider, including any riding gear or other equipment, partially compresses shock absorber 100 until the increased pressure in air spring 142 offsets the expected operating load.

At step 814, the sag setting bleed valve 124 is opened allowing gas to bleed from positive air spring 142. As gas is bled from positive air spring 142, piston 116 and piston rod 120 move into the gas cylinder 110, thereby decreasing the volume of positive air spring 142 and maintaining a pressure within positive air spring 142 that offsets the load on the shock absorber 100. It will be appreciated that in some embodiments, two or more separate sag setting bleed ports located at different positions of gas cylinder 110 corresponding to different relative sag settings. In such embodiments, the correct port must first be fluidly coupled to sag setting bleed valve 124 before air is bled from the positive air spring 142. At step 816, the motion of piston 116 eventually moves a sealing element 118 over an inner surface of the sag setting bleed valve 124, stopping any additional air from bleeding from the positive air spring 142. Then at step 818, the bleed valve 124 may be closed to prevent air from bleeding from the positive air spring 142 during normal operation of the vehicle, and method 800 terminates.

In one embodiment, the initial sag position of the vehicle suspension can be automatically set and facilitated by having a bleed valve 124 within the shock absorber 100 bleed off air pressure until a specific sag level is achieved. Each particular shock absorber stroke length would correspond to a specific amount of sag/location of the bleed valve 124. The user would pressurize their shock absorber 100 to a maximum shock pressure of, for example, 300 psi or so, to over pressurize the shock absorber 100 beyond any reasonable properly set sag pressure. The user may then manipulate the bleed valve 124 and sit on the vehicle. In one embodiment, the shock absorber 100 will bleed air from the positive air spring 142 until the bleed valve 124 encounters a shut off abutment which thereby shuts the bleed valve 124. In another embodiment, the shock absorber 100, having an axial position sensor and a controller to measure the axial position of the shock absorber from full extension (or any selected set "zero" position datum), "knows" it is extended beyond a proper sag level, and, in a sag set-up mode, an electrically actuated valve is opened to bleed air pressure from the positive air spring 142 in a controlled manner until the proper predetermined sag level is reached, at which point the valve automatically closes and the controller transitions out of the sag set-up mode. Alternatively, the user can switch the sag set up mode off upon reaching a proper sag setting. In another embodiment, with the controller in a normal ride mode, the vehicle is in a proper starting point for the sag level measurement. More pressure can be added to the air spring or pressure can be reduced from the air spring to accommodate different rider styles and or terrain. This auto sag feature can be achieved electronically as well, by having a position sensor in the shock, and a shock model data allowing the controller to adjust spring preload (e.g. air pressure) appropriately according to the given model. In other words, the controller will compare the shock model data to the measured motion of the shock absorber and adjust the air pressure as needed to match a target sag level. An electronically controlled pressure relief valve is utilized to bleed off air spring pressure until the sensor determines the shock absorber 100 is at its' proper sag. The pressure relief valve is then directed to close. In this manner, a proper amount of sag in the vehicle suspension is achieved.

The foregoing embodiments, while shown in configurations corresponding to rear bicycle shock absorbers, are equally applicable to bicycle or motorcycle front forks or other vehicle shock absorbers having or comprising air springs. While the foregoing is directed to embodiments of the present disclosure, other and further embodiments may be implemented without departing from the scope of the disclosure, the scope thereof being determined by the claims that follow.

## Claims

1. A shock absorber comprising:
a gas spring cylinder containing a piston, the piston being moveable between an extended position and a compressed position within the gas spring cylinder; and
a bleed port fluidly coupled to the cylinder at a first position, wherein the first position corresponds to a first sag setting of the shock absorber.

2. The shock absorber of claim 1, wherein the first position corresponds to a point on the cylinder, measured from the extended position of the piston:
(a) substantially equal to 25 percent of the distance between the extended position of the piston and the compressed position of the piston; or
(b) within the range of the extended position of the piston and approximately 50 percent of the distance between the extended position of the piston and the compressed position of the piston.

3. The shock absorber of claim 1 or 2, further comprising a sleeve inserted over the cylinder and substantially coaxial therewith, the sleeve configured to close the bleed port in a first position and open the bleed port in a second position and optionally: wherein the sleeve is coupled to the cylinder via a course thread, the sleeve moveable from the first position to the second position by rotating the sleeve on the course thread, or wherein the sleeve is retained on the cylinder via a retaining ring and spring biased towards the first position.

4. The shock absorber of claim 1, 2 or 3, further comprising a bleed valve, such as a Schrader type pneumatic valve, fluidly coupled with the bleed port.

5. The shock absorber of claim 1, 2, 3 or 4, further comprising a secondary bleed port fluidly coupled to the cylinder at a second position, wherein the second position corresponds to a second sag setting of the shock absorber that is different from the first sag setting.

6. The shock absorber of claim 5, further comprising a sleeve inserted over the cylinder and substantially coaxial therewith, the sleeve configured to fluidly couple the bleed port to a bleed valve when the sleeve is in a first position and fluidly couple the secondary bleed port to the bleed valve when the sleeve is in a second position.

7. The shock absorber of any preceding claim, further comprising a bypass channel formed in an inside surface of the cylinder at a second position, wherein the bypass channel is configured to enable the pressure of gas on both sides of the piston to equalize when the piston is located approximately in the second position within the cylinder.

8. The shock absorber of any preceding claim, further comprising a damper that includes:
a damping cylinder having first and second ends; and
a movement damping element movably mounted within the damping cylinder,
wherein the second end of the damping cylinder is telescopically housed within the cylinder and is coupled to the piston.

9. The shock absorber of any preceding claim, further comprising a fill port fluidly coupled to the gas cylinder, the fill port being configured to enable gas to be added to the cylinder.

10. A vehicle suspension system comprising a shock absorber as claimed in any of claims 1 to 9.

11. The vehicle suspension system of claim 10, further comprising a front fork having a first telescopic tube and a second telescopic tube, the first telescopic tube including a second gas spring cylinder, and a second bleed port, and the second telescopic tube including a damper.

12. The vehicle suspension system of claim 10 or 11, wherein a first end of the shock absorber is coupled to a main frame of the vehicle and a second end of the shock absorber is coupled to a rear swingarm of the vehicle that is moveable relative to the main frame.

13. A vehicle comprising a vehicle suspension system as claimed in any of claims 10 to 12.

14. A method for adjusting a vehicle suspension, the method comprising:
pressurizing a gas spring cylinder of a shock absorber to a first pressure, wherein the first pressure is greater than an expected operating pressure of the shock absorber;
loading the vehicle suspension to partially compress the shock absorber;
bleeding gas from the cylinder through a bleed port fluidly coupled to the cylinder at a first position that corresponds to a first sag setting of the shock absorber; and
automatically closing the bleed port with a sealing element within the cylinder when the shock absorber compresses to a position corresponding with the first position.

15. A kit comprising a shock absorber as claimed in any of claims 1 to 9 and a set of instructions for performing a method according to claim 14.
